# FASCICULE DE BREVET EUROPEEN

(11) **EP 1 100 184 B1**
(45) Date de publication et mention de la délivrance du brevet: **19.12.2007**
(21) Numéro de dépôt: 00402834.6
(22) Date de dépôt: 13.10.2000
(51) Int. Cl.: H02K 9/06, H02K 9/16, H02K 5/20, F04D 29/44, H02K 5/10

(54) **Dispositif de ventilation et moteur électrique de traction ferroviaire équipé d'un tel dispositif**
Lüftungsvorrichtung und elektrischer Bahn-Traktionsmotor ausgerüstet mit einer solchen Vorrichtung
Motor ventilating device and electric traction motor provided with this device

(30) Priorité: 09.11.1999 FR 9914309
(43) Date de publication de la demande: 16.05.2001
(73) Titulaire: Alstom, 92300 Levallois-Perret (FR)
(72) Inventeur: Morel, Ludovic, 25290 Ornans (FR); Raguideau, Jean-Luc, 75017 Paris (FR); Raguin, Bruno, 25720 Beurre (FR)
(74) Mandataire: de Lambilly Delorme, Marie Pierre

(56) Documents cités:
- EP-A- 0 261 295
- EP-A- 0 387 743
- EP-A- 0 416 468
- EP-A- 0 849 858
- DE-A- 4 242 132
- DE-U- 29 716 977
- US-A- 5 000 769
- US-A- 5 214 325
- PATENT ABSTRACTS OF JAPAN vol. 1988, no. 01, 30 janvier 1998 (1998-01-30) -& JP 09 233766 A (TOSHIBA CORP), 5 septembre 1997 (1997-09-05)

## Description

L'invention a trait à un dispositif de ventilation et à un moteur électrique de traction ferroviaire équipé d'un tel dispositif.

Dans le domaine de la traction ferroviaire, un moteur électrique est généralement intégré au niveau d'un bogie, sous la caisse d'une motrice ou d'une voiture. Comme un moteur électrique peut consommer une puissance électrique importante, il doit être refroidi pour dissiper une partie de cette puissance et il est connu d'utiliser l'atmosphère ambiante pour ce faire. Cependant, l'environnement des moteurs de traction ferroviaire est généralement pollué, d'une part à cause des déchets pouvant se trouver sur la voie et d'autre part à cause de la pluie ou de la boue résultant de conditions météorologiques défavorables. Pour les raisons qui précèdent, il est connu de protéger un moteur électrique de son environnement en disposant des filtres ou grilles sur les entrées d'air de refroidissement. Il est également connu d'aspirer l'air de refroidissement du moteur, à travers une gaine, dans une zone de pollution réduite, telle qu'un compartiment intérieur du train ou une zone située au niveau de la toiture d'une motrice. Ces mesures induisent des pertes de charge importantes sur le trajet d'écoulement de l'air de refroidissement, ce qui diminue son efficacité et peut conduire à un encrassement du moteur.

Par le document EP 0 849 858, il est connu un moteur comportant un ventilateur placé dans la chambre de sortie d'air et aspirant l'air entrant au travers du moteur comportant une enceinte renfermant une partie du stator et présentant des canaux dans le stator. Les risques d'encrassement ou de pollution sont élevés car l'air aspiré chargé de particules traverse le moteur.

On connaît également par EP 0 387 743 un moteur comportant un ventilateur placé dans une chambre d'entrée d'air et refoulant l'air entrant dans des canaux traversant le circuit magnétique statorique, le moteur comportant une enceinte renfermant une partie du rotor, ventilée par un second circuit d'air fermé.

Par le document FR-A-2 645 817, il est connu de ventiler un moteur de traction ferroviaire au moyen de l'air refoulé par un ventilateur, une partie de cet air étant évacué par centrifugation dans une ouverture en regard de laquelle est disposé un élément séparateur. Les particules les plus lourdes sont évacuées sous l'effet des forces centrifuges et ne sont donc pas envoyées vers le volume interne du moteur. Cependant, l'efficacité de la centrifugation dépend essentiellement de la vitesse de rotation du ventilateur d'entrée qui est liée à la vitesse de fonctionnement du moteur. Cette vitesse dépend des conditions d'utilisation du moteur, un moteur pouvant tourner le plus souvent à faible régime, notamment pour un véhicule ferroviaire urbain, du type tramway ou trolley. De plus, l'air évacué par l'ouverture périphérique ne participe pas au refroidissement et des émissions sonores peuvent être générées par le refoulement d'une partie du flux d'air directement vers l'atmosphère ambiante.

C'est à ces inconvénients qu'entend plus particulièrement remédier l'invention en proposant un dispositif de ventilation dans lequel la totalité de l'air refoulé par un ventilateur est mise à profit pour le refroidissement du moteur alors que les risques d'encrassement ou de pollution sont minimisés.

Dans cet esprit, l'invention concerne un dispositif de ventilation d'un moteur électrique de traction ferroviaire comprenant un ventilateur centrifuge apte à tourner dans un ou deux sens disposé dans une chambre d'entrée d'air et refoulant un flux d'air en direction du moteur, une enceinte de confinement renfermant au moins le rotor du moteur, et des canaux de refroidissement du stator caractérisé en ce que ledit flux d'air refoulé par ledit ventilateur est divisé en un flux interne, relativement propre dirigé vers l'intérieur de ladite enceinte de confinement, et un flux externe, chargé d'impuretés sous l'effet centrifuge dudit ventilateur dirigé vers lesdits canaux de refroidissement du stator du moteur.

Grâce à l'invention, le flux d'air refoulé par le ventilateur d'entrée est utilisé pour refroidir à la fois le rotor et le stator du moteur, la partie de l'air la plus susceptible d'être polluée par des particules relativement lourdes étant dirigée, sous l'effet des forces centrifuges, vers l'extérieur, c'est-à-dire vers les canaux de refroidissement du stator, alors que la partie la moins polluée qui constitue le flux interne peut être dirigée vers l'intérieur de l'enceinte de confinement, sans risque majeur d'encrassement interne du moteur.

Selon des aspects avantageux mais non obligatoires de l'invention, le dispositif incorpore une ou plusieurs des caractéristiques suivantes :
Le ventilateur refoule dans une tubulure d'alimentation des canaux, une cloison de séparation du volume interne de cette tubulure et de l'enceinte de confinement étant percée d'au moins une ouverture de communication permettant la circulation du premier flux. On peut prévoir plusieurs ouvertures de communication entre le volume interne de la tubulure et l'enceinte, ces ouvertures étant sensiblement régulièrement réparties autour d'un axe central du moteur. On peut également prévoir que cette ou ces ouvertures sont formées radialement à l'intérieur du trajet défini par la tubulure pour le second flux. Grâce à cet aspect de l'invention, le premier flux d'air de refroidissement dirigé vers l'enceinte est "prélevé" sur le flux dirigé vers les canaux de refroidissement du stator, ce prélèvement ayant lieu sur une face interne de la tubulure dont l'air le plus pollué, c'est-à-dire chargé en particules relativement lourdes, est le plus éloigné.
   - Il est prévu au moins une ouverture de sortie de l'enceinte pour le premier flux d'air. Cette ouverture de sortie peut être aménagée à proximité du débouché d'un canal de refroidissement du stator. Dans ce cas, une nervure de séparation des flux d'air sortant de cette ouverture et de ce canal est avantageusement prévue.
   - Un second ventilateur génère ou assiste un écoulement d'air à l'intérieur de l'enceinte de confinement, à partir du flux interne. Ce second ventilateur augmente les mouvements de l'air dans l'enceinte de confinement et améliore ainsi l'efficacité du refroidissement des éléments contenus dans cette enceinte.
   - L'enceinte de confinement renferme le rotor, une partie centrale interne du stator, au moins un bobinage associé à ce stator ou à ce rotor, une partie de l'arbre central du moteur et, éventuellement, un second ventilateur. L'ensemble des éléments précités est ainsi refroidi par le premier flux d'air.

L'invention concerne également un moteur électrique de traction ferroviaire équipé d'un dispositif de ventilation tel que précédemment décrit. Un tel moteur fonctionne de façon très satisfaisante, y compris dans un environnement pollué, et son refroidissement particulièrement efficace permet d'envisager de réaliser un moteur conforme à l'invention de grande puissance dans un encombrement relativement réduit.

L'invention sera mieux comprise et d'autres avantages de celle-ci apparaîtront plus clairement à la lumière de la description qui va suivre de deux modes de réalisation d'un moteur de traction ferroviaire équipé d'un dispositif de ventilation conforme à son principe, donnée uniquement à titre d'exemple et faite en référence aux dessins annexés dans lesquels :
- La figure 1 est une coupe longitudinale d'un moteur de traction ferroviaire conforme à un premier mode de réalisation de l'invention et
- La figure 2 est une coupe analogue à la figure 1 pour un moteur de traction ferroviaire conforme à un second mode de réalisation de l'invention.

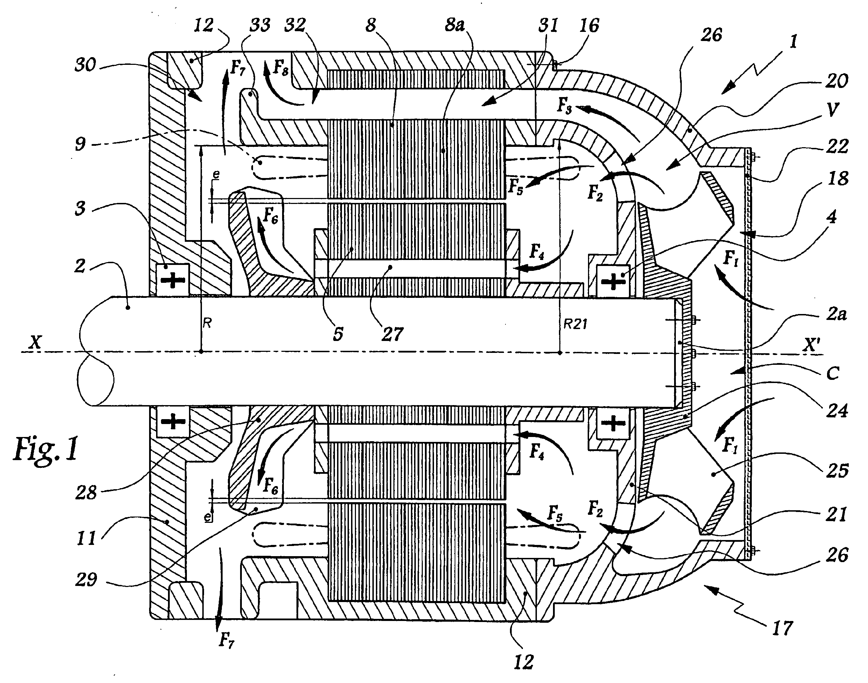

Le moteur 1 représenté à la figure 1 comprend un arbre central 2 supporté par des paliers 3 et 4 et sur lequel est monté un rotor 5.

On note X-X' l'axe longitudinal de l'arbre 2 qui est l'axe de rotation du rotor 5.

Un stator 8, centré sur l'axe X-X', est disposé radialement autour du rotor 5 et équipé d'un bobinage 9. On note e l'entre-fer entre le rotor 5 et le stator 8.

Un flasque 11 supporte le palier 3 et est relié à une bride 12 solidaire du stator 8.

D'autre part, la bride 12 est reliée par des vis 16 à une tubulure 17 définissant un orifice d'entrée 18 pour l'air de refroidissement du moteur 1 et supportant le palier 4.

La tubulure 17 comprend une partie d'enveloppe externe 20 et une partie d'enveloppe interne 21 définissant entre elles un volume interne V de la tubulure 17, l'ouverture 18 étant ménagée dans la partie 20, alors que le palier 4 est solidaire de la partie 21. Une grille 22 est prévue dans l'ouverture 18 et permet de bloquer des déchets tels que des papiers ou des feuilles de végétaux qui auraient tendance à pénétrer dans la tubulure 17 par l'orifice 18.

Un ventilateur 24, dont on note 25 les aubes qui sont radiales, est monté à une extrémité 2a de l'arbre 2, à l'intérieur d'une chambre d'entrée d'air C formée dans la tubulure 17, entre la grille 22 et la partie interne 21.

Compte tenu de la forme et de la disposition des éléments 11, 12 et 21, ceux-ci forment une enceinte E de confinement du rotor 5, d'une partie de l'arbre 2, d'une partie interne 8a du stator 8, distante de l'axe X-X' d'une distance inférieure à un rayon R correspondant approximativement au rayon interne maximum R₂₁ de la partie 21 et du bobinage 9. L'enceinte E permet donc de protéger les éléments 5, 8a et 9 de l'atmosphère ambiante et, notamment, des poussières.

Conformément à l'invention, le flux d'air F₁ pénétrant par l'orifice 18 dans la tubulure 17 est refoulé par le ventilateur 24 à la fois en direction de l'intérieur de l'enceinte E et vers le stator 8, comme représenté respectivement par les flux d'air F₂ et F₃.

Le flux d'air interne F₁ traverse des ouvertures 26 ménagées dans la partie 21 de la tubulure 17, ces ouvertures étant réparties autour de l'axe X-X'. Le flux d'air F₂ entrant dans l'enceinte E se divise en deux flux d'air, F₄ et F₅. Le flux d'air F₄ transite par des canaux 27 prévus dans le rotor 5 parallèlement à l'axe X-X', ce qui permet de refroidir efficacement le rotor 5. Le flux d'air F₅ passe par l'entrefer e entre le rotor 5 et le stator 8 et lèche le stator.

La circulation de l'air à l'intérieur de l'enceinte E est assistée par un second ventilateur 28 monté sur l'arbre 2 à l'intérieur de l'enceinte E et dont les pales 29 créent un mouvement de brassage de l'air à partir des ouvertures 26 et en direction de plusieurs orifices de sortie 30 ménagés dans la bride 12. On a représenté par les flèches F₆ et F₇ le flux d'air de refroidissement dans la partie aval et en sortie de l'enceinte E, qui résulte de la réunion des flux d'air F₄ et F₅.

Le flux d'air F₃ est, quant à lui, dirigé vers des canaux 31 prévus dans le stator 8 radialement à l'extérieur de la partie 8a. Ces canaux 31 peuvent être régulièrement répartis autour de l'axe X-X' ou localisés dans certains secteurs, en particulier dans le cas où le stator présente un contour extérieur polygonal. Par exemple, dans le cas où le stator 8 a un contour extérieur octogonal alors que sa partie centrale est circulaire, les canaux 31 sont ménagés dans quatre zones externes de la section du stator. Le flux d'air F₃ permet de refroidir le stator 8 et débouche en F₈ par un orifice de sortie 32 prévu à l'extrémité aval chaque canal 31 dans la bride 12, à proximité des orifices 30.

Une nervure 33 est prévue au voisinage de chaque orifice 32 pour dévier le flux F₈ et éviter ainsi de créer une contre-pression au niveau de l'orifice 30 voisin.

Comme le second flux d'air F₃ suit un trajet, défini par la tubulure 17 et les canaux 31, qui est radialement à l'extérieur de celui suivi par le premier flux F₂, il est plus chargé en impuretés, qui sont relativement lourdes et sont centrifugées par le ventilateur 17, ce qui n'est pas particulièrement gênant car les canaux 31 sont séparés du volume interne du moteur défini par l'enceinte E et car leur section est suffisamment importante pour permettre son écoulement. En outre, les canaux 31 sont globalement rectilignes, de sorte que le flux F₃ n'est pas gêné dans son écoulement, les impuretés ayant peu tendance à se déposer dans les canaux 31.

Au contraire, le flux d'air F₂ est relativement propre car les ouvertures 26 sont situées radialement à l'intérieur de la zone de rayon R, c'est-à-dire à l'intérieur du trajet du second flux d'air. En outre, les ouvertures 26 sont sensiblement perpendiculaires au flux d'air F₃ dans la zone considérée de la tubulure 17, le flux F₃ constituant le flux d'écoulement principal, de telle sorte que les impuretés suivent préférentiellement le trajet du flux F₃.

Ainsi, l'air circulant dans l'enceinte E est relativement propre et ne risque pas d'encrasser les parties tournantes du moteur 1 ou de s'accumuler dans l'entrefer e ou dans le bobinage 9, même si le trajet des flux d'air F₄ à F₆ dans l'enceinte E est relativement tortueux.

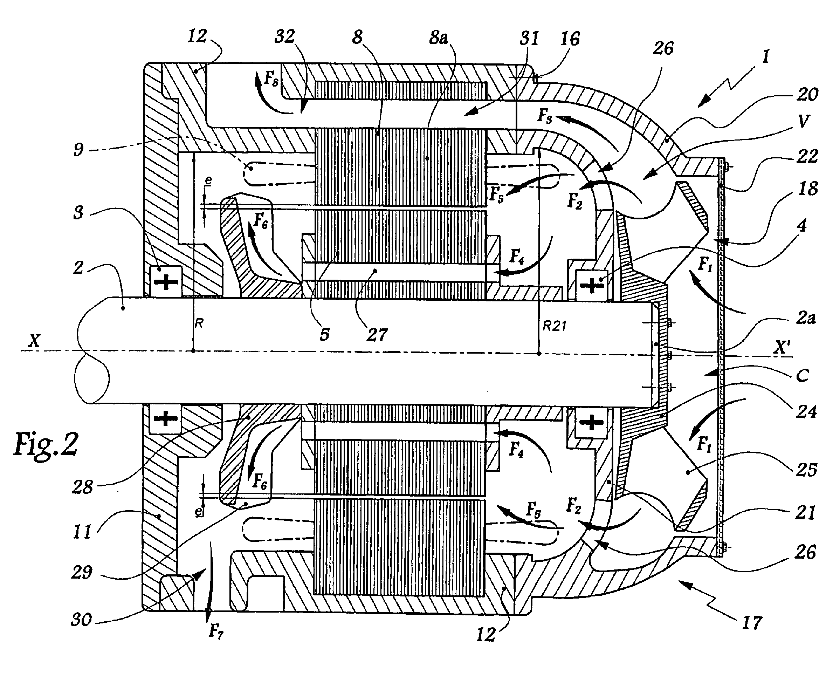

Dans le second mode de réalisation de l'invention représenté à la figure 2, les éléments analogues à ceux du premier mode de réalisation portent des références identiques. Ce mode de réalisation diffère du précédent en ce que les orifices de sortie 30 du flux d'air interne sont décalés angulairement des canaux 31. Ainsi, les orifices de sortie 32 par lesquels débouche l'écoulement externe, comme représenté par la flèche F₈, sont disposés de telle sorte que les écoulement F₇ et F₈ n'interfèrent pas entre eux. Comme représenté à la figure 2, un orifice 32 peut être diamétralement opposé à un orifice 30.

Quel que soit le mode de réalisation considéré, le refroidissement obtenu est de très bonne qualité car la totalité du flux F₁ est utilisée pour le refroidissement du moteur 1. Le diamètre du ventilateur 1 peut donc être réduit par rapport aux dispositifs de l'état de la technique, ce qui permet de réduire en conséquence le bruit émis par ce ventilateur.

Compte tenu de la centrifugation des impuretés vers l'extérieur de l'enceinte E, la grille 22 peut avoir une maille relativement importante, ce qui diminue les pertes de charge induites et il n'est pas nécessaire de procéder à une maintenance régulière d'un élément de filtration tel que ceux équipant certains moteurs de l'état de la technique.

L'invention est applicable indépendamment du type exact du moteur 1, qui peut être synchrone ou asynchrone, du type exact du ventilateur 24 qui peut être apte à tourner dans un seul sens ou dans les deux sens autour de l'axe X-X', du type de carcasse du moteur qui peut, notamment, être formée par un paquet de tôles et emmanché dans une virole massive avec, éventuellement, des ailettes externes.

Selon une variante non représentée de l'invention, la bride 12 peut être réalisée en plusieurs pièces, notamment afin de faciliter la mise en place du stator 8.

## Revendications

1. Dispositif de ventilation d'un moteur électrique (1) de traction ferroviaire comprenant
- un ventilateur centrifuge (24) apte à tourner dans un ou deux sens, disposé dans une chambre d'entrée d'air (C) et refoulant un flux d'air (F₁) en direction dudit moteur,
- une enceinte (E) de confinement renfermant au moins le rotor (5) ) dudit moteur,
- des canaux (31) de refroidissement du stator (8),
**caractérisé en ce que** ledit flux d'air (F₁) refoulé par ledit ventilateur est divisé en un flux interne (F₂), relativement propre dirigé vers l'intérieur de ladite enceinte (E) de confinement, et un flux externe (F₃), chargé d'impuretés sous l'effet centrifuge dudit ventilateur (24) dirigé à l'extérieur de ladite enceinte (E) vers lesdits canaux (31) de refroidissement du stator (8) dudit moteur.

2. Dispositif de ventilation selon la revendication 1, **caractérisé en ce que** ledit ventilateur (24) refoule dans une tubulure (17) d'alimentation desdits canaux (31), une cloison (21) de séparation du volume interne ladite tubulure et de ladite enceinte (E) étant percée d'au moins une ouverture (26) de communication permettant la circulation dudit premier flux (F₂).

3. Dispositif selon la revendication 2, **caractérisé en ce qu'**il comprend plusieurs ouvertures de communication (26) entre le volume interne (V) de ladite tubulure (17) et ladite enceinte (E), lesdites ouvertures étant sensiblement régulièrement réparties autour d'un axe central (X-X') dudit moteur (1).

4. Dispositif selon l'une des revendications 2 ou 3, **caractérisé en ce que** ladite ou lesdites ouvertures (26) sont formées radialement à l'intérieur du trajet défini par ladite tubulure (17) pour ledit second flux (F₃).

5. Dispositif selon l'une des revendications précédentes, **caractérisé en ce qu'**il comprend au moins une ouverture de sortie (30) dudit premier flux d'air (F₂) de ladite enceinte (E).

6. Dispositif selon la revendication 5, **caractérisé en ce que** ladite ouverture de sortie (30) est ménagée à proximité du débouché (32) d'un canal de refroidissement (31) dudit stator (8).

7. Dispositif selon la revendication 6, **caractérisé en ce qu'**il comprend une nervure (33) de séparation des flux d'air (F₇, F₈) sortant de ladite ouverture (30) et dudit canal (31).

8. Dispositif selon l'une des revendications précédentes, **caractérisé en ce qu'**il comprend un second ventilateur (28) prévu pour générer ou assister un écoulement d'air (F₄, F₅, F₆) à l'intérieur de ladite enceinte (E), à partir dudit flux interne (F₂) .

9. Dispositif selon l'une des revendications précédentes, **caractérisé en ce que** ladite enceinte de confinement (E) renferme ledit rotor (5), une partie radiale interne (8a) dudit stator (8), au moins un bobinage (9) associé audit stator ou audit rotor, une partie d'un arbre central (2) dudit moteur (1) et, éventuellement, un second ventilateur (28).

10. Moteur électrique de traction ferroviaire (1) équipé d'un dispositif de ventilation (11-33, E, C) selon l'une des revendications précédentes.

## Claims

1. Device for ventilating a rail traction electric motor (1) comprising:
- a centrifugal fan (24) capable of rotating in one or both directions, placed in an air inlet chamber (C) and delivering air towards the said motor,
- a confinement space (E) containing at least the rotor (5) of the motor, and
- stator cooling ducts (31);
**characterized in that** the air stream (F₁) delivered by the said fan is split into an inner stream (F₂), relatively clean directed towards the interior of said confinement space (E), and an outer stream (F₃) laden with with impurities under the centrifuge effect of the fan (24) directed towards the exterior of the said confinement space (E) towards said stator cooling ducts of the said motor.

2. Ventilation device according to claim 1, **characterized in that** the said fan (24) delivers into a feed nozzle (17) for the said ducts (31), a partition (21) which separates the internal volume of the said nozzle from the said space (E) being pierced with at least one communication opening (26) allowing the said first stream (F₂) to circulate.

3. Device according to claim 2, **characterized in that** it comprises several openings (26) for communication between the internal volume (V) of the said nozzle (17) and the said space (E), the said openings being distributed roughly uniformly around a central axis (X-X') of the said motor (1).

4. Device according to either of claims 2 and 3, **characterized in that** the said opening or openings (26) is (or are) formed radially on the inside of the path defined by the said nozzle (17) for the said second stream (F₃).

5. Device according to one of the preceding claims, **characterized in that** it comprises at least one outlet opening (30) for the said first air stream (F₂) of the said space (E).

6. Device according to claim 5, **characterized in that** the said outlet opening (30) is formed near to the mouth (32) of a duct (31) for cooling the said stator (8).

7. Device according to claim 6, **characterized in that** it comprises a rib (33) for separating the air streams (F₇, F₈) leaving the said opening (30) and leaving the said duct (31).

8. Device according to one of the preceding claims, **characterized in that** it comprises a second fan (28) designed to generate or assist an air flow (F₄, F₅, F₆), inside the said space (E), from the said inner stream (F₂).

9. Device according to one of the preceding claims, **characterized in that** the said confinement space (E) contains the said rotor (5), an internal radial part (8a) of the said stator (8), at least one winding (9) associated with the said stator or with the said rotor, part of a central shaft (2) of the said motor (1) and, possibly, a second fan (28).

10. Rail traction electric motor (1) equipped with a ventilation device (11-33, E, C) according to one of the preceding claims.

## Patentansprüche

1. Vorrichtung zur Belüftung eines elektrischen Bahntraktionsmotors mit
- einem Zentrifugalventilator (24), der sich in einem Sinn oder in zwei Sinnen drehen kann und untergebracht ist in einer Lufteintrittskammer (C) und einen Luftstrom (F1) in Richtung des Motors abgibt.
- ein Umhüllung (E). die wenigstens den Rotor (5) des Motors einschließt,
- Kanäle (31) zur Abkühlung des Stators (8),
**dadurch gekennzeichnet,**
**dass** der Luftstrom (F1), der durch den Ventilator abgegeben wird, unterteilt wird in einen inneren Strom (F2), der in das Innere der Umhüllung (E) geleitet wird, und einen äußeren Strom (F3), der belastet ist mit Verunreinigungen aufgrund des Zentrifugaleffekts des Ventilators (24), der zur Außenseite der Umhüllung (E) in Richtung der Kanäle (31) zur Abkühlung des Stators (8) des Motors geleitet wird.

2. Vorrichtung zur Belüftung gemäß Anspruch 1, **dadurch gekennzeichnet, dass** der Ventilator (24) in einen Rohransatz (17) zur Versorgung der Kanäle (31) fördert, wobei eine Zwischenwand (21) zur Trennung des Volumens innerhalb des Rohransatzes und innerhalb der Umhüllung (E) durch wenigstens eine Öffnung (26) durchbrochen ist, die eine Verbindung herstellt, die eine Zirkulation des ersten Stroms (F2) ermöglicht.

3. Vorrichtung nach Anspruch 2, **dadurch gekennzeichnet, dass** sie mehre Verbindungsöffnungen (26) zwischen dein Volumen (F) innerhalb des Rohransatzes (17) und innerhalb der Umhüllung (E) umfasst, welche Öffnungen im wesentlichen gleichmäßig um die Mittelachse (X-X) des Motors (1) verteilt sind.

4. Vorrichtung nach einem der Ansprüche 2 oder 3. **dadurch gekennzeichnet, dass** die Öffnung oder die Öffnungen (26) radial ausgebildet sind im Inneren der Bahn, die begrenzt wird durch den Rohransatz (17) für den zweiten Strom (F3).

5. Vorrichtung nach einem der vorhergehenden Ansprüche, **dadurch gekennzeichnet, dass** sie wenigstens eine Auslassoffnung (30) des ersten Luftstromes (F2) der Umhüllung (E) umfaßt.

6. Vorrichtung nach Anspruch 5, **dadurch gekennzeichnet, dass** die Auslassöffnung (30) hergestellt ist in der Nähe der Mündung (32) eines Kanals (31.) zur Abkühlung des Stators (8).

7. Vorrichtung nach Anspruch 6. **dadurch gekennzeichnet, dass** die Vorrichtung eine Rippe (33) zur Trennung der Luftströme (F7,F8) umfasst, die aus der Auslassöffnung (30) des Kanals (31) austreten.

8. Vorrichtung nach einem der vorhergehenden Ansprüche, **dadurch gekennzeichnet, dass** sie einen zweiten Ventilator (28) umfasst, der vorgesehen ist zur Erzeugung oder Verstärkung eines Luftstroms (F4,F5,F6) im Inneren der Umhüllung (E) von dem inneren Strom (F2) aus.

9. Vorrichtung nach einem der vorhergehenden Ansprüche, **dadurch gekennzeichnet, dass** die Umhüllung (E) den Rotor (5), einen inneren radialen Bereich (8a) des Stators (8), wenigstens eine Spule (9), die dem Stator oder dem Rotor zugeordnet ist, einen Bereich der Mittelwelle (2) des Motors (1) und evtl. einen zweiten Ventilator (28) einschließt.

10. Bahntraktionsmotor (1), ausgerüstet mit einer Lüftungsvorrichtung (11-33.E,C) gemäß einem der vorhergehenden Ansprüche.
